# EUROPÄISCHE PATENTSCHRIFT

(11) **EP 0 972 684 B1**
(45) Veröffentlichungstag und Bekanntmachung des Hinweises auf die Patenterteilung: **10.09.2003**
(21) Anmeldenummer: 99113519.5
(22) Anmeldetag: 05.07.1999
(51) Int. Cl.: B60R 22/405

(54) **Sperrmechanismus für einen Sicherheitsgurtaufroller**
Locking mechanism for a safety belt retractor
Mécanisme de blocage pour un enrouleur de ceinture de sécurité

(30) Priorität: 13.07.1998 DE 29812435 U
(43) Veröffentlichungstag der Anmeldung: 19.01.2000
(73) Patentinhaber: TRW Occupant Restraint Systems GmbH & Co. KG, 73551 Alfdorf (DE)
(72) Erfinder: Kielwein, Thomas, 73569 Eschach (DE); Rink, Jürgen, 73550 Waldstetten (DE); Schmid, Johannes, 73527 Schwäbisch Gmünd (DE)
(74) Vertreter: Degwert, Hartmut, Dipl.-Phys.

(56) Entgegenhaltungen:
- DE-A- 2 722 744
- DE-A- 2 751 362
- US-A- 4 858 847
- US-A- 5 071 194

## Beschreibung

Die Erfindung betrifft einen Sperrmechanismus für einen Gurtaufroller gemäß dem Oberbegriff von Patentanspruch 1.

Aus der DE-A-27 22 744 ist ein gattungsgemäßer Gurtaufroller für Sicherheitsgurte in Fahrzeugen bekannt, der eine drehbar in einem Rahmen gelagerte Gurtspule und eine am Rahmen angeordnete Sperrverzahnung aufweist. An der Gurtspule sind zwei Sperrklinken angeordnet, die in die Sperrverzahnung am Rahmen eingesteuert werden, um den Sperrmechanismus zu aktivieren und die Gurtspule drehfest zu blockieren. Für die gurtbandsensitive Aktivierung des Sperrmechanismus ist eine Trägtheitsscheibe an der Gurtspule relativ verdrehbar angeordnet. Wenn die Trägheitsscheibe aufgrund ihrer Massenträgheit hinter der Drehung der Gurtspule zurückbleibt, werden die Sperrklinken durch das Zusammenwirken von an der Trägheitsscheibe ausgebildeten Steuerkurven mit an den Sperrklinken angeordneten Kurvenfolgern verschwenkt und so in die Sperrverzahnung am Rahmen eingesteuert.

Dem Problem des Aufeinandertreffens von zwei Zahnspitzen begegnet man zumeist durch eine synchronisierte Einsteuerung. Bei einer solchen synchronisierten Einsteuerung wird die bzw. jede Sperrklinke nur in bestimmten Drehstellungen der Gurtspule zum Rahmen ausgelenkt, so daß sie nur in Zahnlücken treffen kann. Die Synchronisation des Sperrmechanismus erfordert aber einen hohen Aufwand.

Problematisch bei bekannten Sperrmechanismen für Gurtaufroller ist auch der bei häufiger Aktivierung wie bei sogenannten Dauerlauftests zu beobachtende Verschleiß an Sperrklinke und Sperrverzahnung. Dieser Verschleiß erfordert die Verwendung entsprechend hoch belastbarer Werkstoffe und eine großzügige Dimensionierung der beteiligten Bauteile.

Durch die Erfindung wird ein Sperrmechanismus für Gurtaufroller geschaffen, der keine Synchronisation erfordert und sich durch geringen Verschleiß bei häufiger Aktivierung auszeichnet. Bei dem erfindungsgemäßen Gurtaufroller ist die Sperrklinke nicht an der Gurtspule, sondern an der Trägheitsscheibe gelagert. Nicht die Trägheitsscheibe, sondern die Gurtspule weist ein an der Sperrklinke angreifendes Betätigungselement auf, das die Sperrklinke bei Relativdrehung zwischen Gurtspule und Trägheitsscheibe in die Sperrverzahnung am Rahmen einsteuert. Durch diese einfachen Maßnahmen wird der Einsteuervorgang der Sperrklinke grundlegend verändert. Bei einem herkömmlichen Gurtaufroller ist die Sperrklinke an der Gurtspule gelagert und dreht sich mit dieser. Für die gurtbandsensitive Einsteuerung ist eine plötzliche Drehung der Gurtspule erforderlich. Da sich die Sperrklinke mit der Gurtspule dreht, hat sie zum Zeitpunkt ihrer Einsteuerung in die Sperrverzahnung am Rahmen eine entsprechend hohe Umfangsgeschwindigkeit relativ zur Sperrverzahnung. Diese Umfangsgeschwindigkeit der Sperrklinke bei ihrem Auftreffen auf der Sperrverzahnung führt zu Prellerscheinungen und Verschleiß. Bei dem erfindungsgemäßen Sperrmechanismus ist aber die Sperrklinke an der Trägheitsscheibe gelagert, die bei plötzlicher Drehung der Gurtspule stehenbleibt. Somit bleibt auch die Sperrklinke relativ zur Sperrverzahnung des Rahmens stehen, wird jedoch durch die Drehung der Gurtspule verschwenkt und in die Sperrverzahnung eingesteuert. Unter Last wird die Sperrklinke an der Gurtspule abgestützt. Zu diesem Zweck ist vorzugsweise an einem Flansch der Gurtspule eine Tasche ausgespart, in der die Sperrklinke angeordnet ist.

Selbst beim Aufeinandertreffen einer Zahnspitze der Sperrklinke auf einer Zahnspitze der Sperrverzahnung am Rahmen erfolgt eine sichere Einsteuerung, denn unmittelbar anschließend an diese Erstberührung wird die Sperrklinke mit der Gurtspule verdreht, so daß die Zahnspitze an einer Zahnflanke der Sperrverzahnung in die nächste Zahnlücke geführt wird. Durch die Vermeidung einer hohen Relativgeschwindigkeit zwischen Sperrklinke und Sperrverzahnung im Moment des Einsteuerns wird der bei bekannten Gurtaufrollern beobachtete Verschleiß vermieden.

Durch die direkte Einsteuerung der Sperrklinke in die Sperrverzahnung wird der Sperrvorgang in kürzester Zeit abgeschlossen, so daß wenig Gurtbandlänge abgezogen wird. Aus demselben Grund eignet sich der Sperrmechanismus auch bei Gurtsystemen mit Straffeinrichtung, insbesondere am Gurtschloß angreifende Straffer, die ein sehr schnelles Ansprechen des Sperrmechanismus erfordern.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
Fig. 1 eine teilweise geschnittene Perspektivansicht eines Gurtaufrollers mit Sperrmechanismus; und
Fig. 2 eine vergrößerte Teilansicht des Sperrmechanismus.

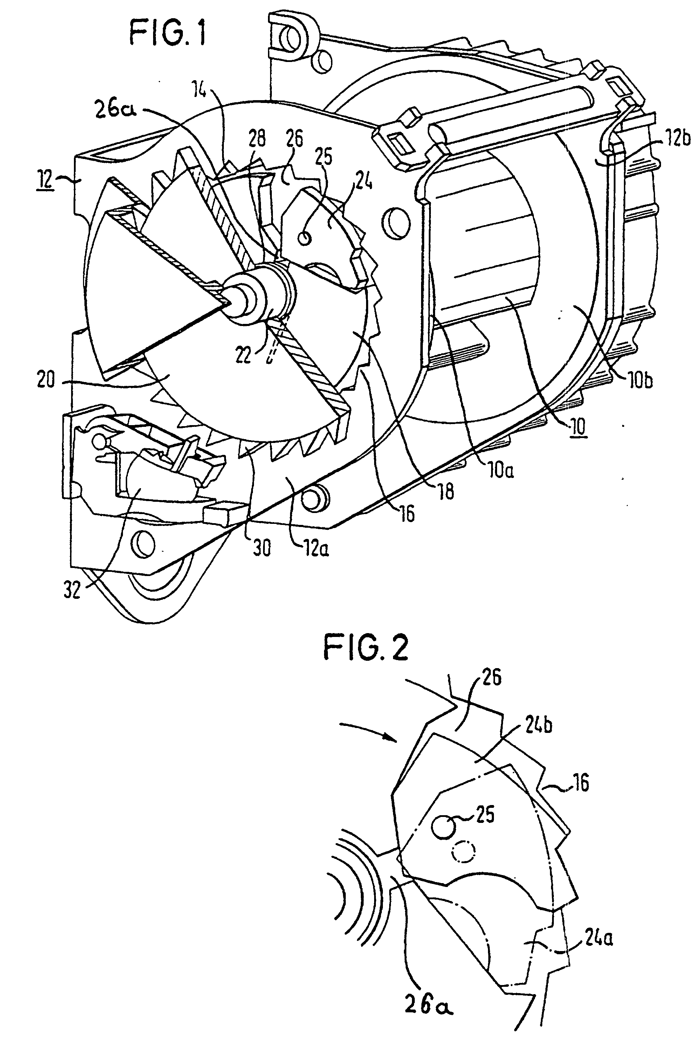

Bei dem in Fig. 1 gezeigten Gurtaufroller ist in üblicher Weise eine Gurtspule 10 in einem Rahmen 12 drehbar gelagert. Der allgemein U-förmige Rahmen 12 weist in einem seiner beiden seitlichen Flügel 12a, 12b eine Öffnung 14 auf, die von einer sich über 360° erstreckenden Sperrverzahnung 16 berandet ist. Die Gurtspule 10 weist zwei Flansche 10a, 10b auf. Der eine Flansch 10a grenzt an die Innenseite des Flügels 12a des Rahmens 12 an und trägt eine einteilig angesetzte Stützscheibe 18, die in den von der Öffnung 14 umgebenen Raum eindringt. Eine Trägheitsscheibe 20 ist auf einem Lagerzapfen 22 der Gurtspule 10 drehbar gelagert. In Fig. 1 ist die Trägheitsscheibe 20 etwa diametral geschnitten dargestellt, um den Blick auf wesentliche Elemente des Sperrmechanismus freizugeben. Dazu gehört eine Sperrklinke 24, die mittels eines Stiftes 25 schwenkbar an der Trägheitsscheibe 20 gelagert ist. In der Stützscheibe 18 ist eine Tasche 26 ausgespart, in der die Sperrklinke 24 angeordnet ist. Die Sperrklinke befindet sich somit in dem durch die Trägheitsscheibe 20, die Tasche 26 und den Flansch 10a begrenzten Raum. Durch eine Feder 28 ist die Trägheitsscheibe 20 in eine durch einen Anschlag begrenzte Drehstellung relativ zur Gurtspule 10 vorgespannt. Die Trägheitsscheibe 20 ist an ihrem Außenumfang mit einer Steuerverzahnung 30 versehen, die mit einem fahrzeugsensitiven Trägheitssensor 32 zusammenwirkt.

Die Trägheitsscheibe 20 bildet ein gurtbandsensitives Sensorelement. Bei plötzlicher Drehung der Gurtspule 10 bleibt die Trägheitsscheibe 20 stehen oder eilt der Drehung der Gurtspule 10 nach, wobei auch die Sperrklinke 24 stehenbleibt bzw. nacheilt. Fig. 2 zeigt die Sperrklinke 24 bei 24a im Ruhezustand und bei 24b im aktivierten Zustand, indem sie um den Stift 25 verschwenkt und in die Sperrverzahnung 16 am Rahmen 10 eingesteuert ist. Die Sperrklinke 24 bildet einen zweiarmigen Hebel, der an seinem ersten Arm zwei Zähne und an seinem zweiten Arm einen Betätigungsansatz trägt. Dieser Betätigungsansatz greift in eine Ausnehmung 26a am radial inneren Grund der Tasche 26. Bei einer Relativdrehung zwischen Gurtspule und Trägheitsscheibe 20 drückt die Stützscheibe 18 gegen den Betätigungsansatz der Sperrklinke 24 und verschwenkt diese entgegen dem Uhrzeigersinn. Die Relativdrehung zwischen Trägheitsscheibe 20 und Gurtspule 10 wird dadurch begrenzt, daß die Sperrklinke 24 an der Berandung der Tasche 26 zur Anlage kommt, so daß sie letztlich an der Gurtspule 10 lasttragend abgestützt ist.

Der Stift 25 ist in der Trägheitsscheibe 20 nachgiebig gelagert, um eine selbsttätige Ausrichtung der Zähne der Sperrklinke 24 aus der Sperrverzahnung 16 zu gewährleisten. Daher können relativ große Fertigungstoleranzen zugelassen werden.

Die Besonderheit des beschriebenen Sperrmechanismus besteht darin, daß die Sperrklinke 24 an der Trägheitsscheibe 20 gelagert ist und somit beim Einsteuervorgang ebenso wie die Trägheitsscheibe der Drehung der Gurtspule nicht oder nur sehr vermindert folgt. Dadurch wird eine hohe Relativgeschwindigkeit zwischen Sperrklinke einerseits und Sperrverzahnung 16 andererseits in Umfangsrichtung vermieden.

Schon die in der Zeichnung gezeigte Ausführung mit nur einer Sperrklinke 24 erreicht die erforderliche Bruchlast. Neben der kompakten Bauform ist auch die große Einfachheit des beschriebenen Sperrmechanismus auffällig. Trotz dieser Einfachheit ist der beschriebene Sperrmechanismus herkömmlichen Ausführungen mit mehreren an der Gurtspule gelagerten Klinken sowohl hinsichtlich des Einsteuerverhaltens als auch des Verschleißes überlegen.

Vorzugsweise wird die Sperrklinke 24 in ihrem Schwerpunkt gelagert, so daß sie sich gegenüber den bei Drehung der Trägheitsscheibe 20 auftretenden Kräften neutral verhält. Für das Einsteuerverhalten ist auch die Geometrie der Sperrverzahnung 16 und der entsprechenden Zähne an der Sperrklinke 24 von Bedeutung. Man sieht in Fig. 2, daß die Flanken der Verzahnung unsymmetrisch und von geringer Steilheit sind. Bezogen auf die Drehrichtung der Gurtspule beim Abwickeln von Gurtband, die in Fig. 2 durch einen Pfeil gekennzeichnet ist, sind die vorderen Flanken der Sperrverzahnung 16 kürzer und steiler als die hinteren. Wenn beim Einsteuervorgang im Extremfalle die Spitzen der Sperrklinke 24 und der Sperrverzahnung 16 aufeinandertreffen, wird durch die anschließende Drehung der Gurtspule die Sperrklinke mitgedreht, so daß ihre Zahnspitze entlang einer längeren und flacheren Flanke der Sperrverzahnung 16 gleitet und sicher in die nächste Zahnlücke trifft.

Bei Drehung der Gurtspule in Aufrollrichtung im Anschluß an einen Sperrvorgang wird die Sperrklinke, durch die Verzahnungsgeometrie begünstigt, nach kürzestem Drehwinkel wieder frei; daher kann auf besondere Maßnahmen, die einen ungewollten Blockierzustand des Gurtaufrollers verhindern, verzichtet werden.

## Patentansprüche

1. Sperrmechanismus für einen Gurtaufroller, der eine drehbar in einem Rahmen (12) gelagerte Gurtspule (10), eine am Rahmen (12) angeordnete Sperrverzahnung (16), eine an der Gurtspule (10) angeordnete Sperrklinke (24) zum Zusammenwirken mit der Sperrverzahnung (16) und eine relativ zur Gurtspule (10) drehbare Trägheitsscheibe (20) als gurtbandsensitives Sensorelement aufweist, wobei die Gurtspule (10) ein an der Sperrklinke (24) angreifendes Betätigungselement (26a) aufweist, das die Sperrklinke (24) bei Relativdrehung zwischen Gurtspule (10) und Trägheitsscheibe (20) in die Sperrverzahnung (16) einsteuert, **dadurch gekennzeichnet, daß** die Sperrklinke (24) an der Trägheitsscheibe (20) gelagert ist.

2. Sperrmechanismus nach Anspruch 1, **dadurch gekennzeichnet, daß** die Sperrklinke (24) an der Gurtspule (10) lasttragend abgestützt ist.

3. Sperrmechanismus nach Anspruch 2, **dadurch gekennzeichnet, daß** die Gurtspule (10) eine Stützscheibe (18) mit einer ausgesparten Tasche (26) aufweist, in der die Sperrklinke (24) angeordnet ist.

4. Sperrmechanismus nach Anspruch 3, **dadurch gekennzeichnet, daß** die Sperrklinke (24) zwischen der Trägheitsscheibe (20) und einem Flansch (10a) der Gurtspule (10) angeordnet ist.

5. Sperrmechanismus nach einem der Ansprüche 1 bis 4, **dadurch gekennzeichnet, daß** die Sperrklinke (24) an der Trägheitsscheibe (20) auf einem Stift (25) schwenkbar gelagert ist.

6. Sperrmechanismus nach einem der Ansprüche 3 bis 5, **dadurch gekennzeichnet, daß** die Sperrklinke (24) einen zweiarmigen Hebel bildet, an dessen erstem Arm wenigstens ein Sperrzahn gebildet ist und dessen zweiter Arm einen Betätigungsansatz aufweist.

7. Sperrmechanismus nach Anspruch 6, **dadurch gekennzeichnet, daß** der Betätigungsansatz in eine Ausnehmung (26a) am radial inneren Grund der Tasche (26) greift.

8. Sperrmechanismus nach einem der Ansprüche 1 bis 7, **dadurch gekennzeichnet, daß** die Trägheitsscheibe (20) an ihrem Außenumfang eine Steuerverzahnung (30) zum Zusammenwirken mit einem fahrzeugsensitiven Trägheitssensor (32) aufweist.

9. Sperrmechanismus nach einem der vorstehenden Ansprüche, **dadurch gekennzeichnet, daß** die Sperrklinke (24) eine in Grenzen nachgiebige Lagerung an der Trägheitsscheibe (20) aufweist.

10. Sperrmechanismus nach einem der vorstehenden Ansprüche, **dadurch gekennzeichnet, daß** die Sperrverzahnung (16) unsymmetrische Zahnflanken aufweist, die in Abrollrichtung der Gurtspule (10) betrachtet vorne kürzer und steiler sind als hinten.

## Claims

1. A blocking mechanism for a belt retractor, comprising a belt reel (10) rotatably mounted in a frame (12), a ratchet toothing (16) arranged on the frame (12), a ratchet pawl (24) arranged on the belt reel (10) for cooperation with the ratchet toothing (16), and an inertial disc (20) rotatable relative to the belt reel (10) and forming a belt webbing-sensitive sensor element, the belt reel (10) having an actuating element (26a) that engages the ratchet pawl (24) and causes the ratchet pawl (24) to engage with the ratchet toothing (16) when there is a relative rotation between the belt reel (10) and the inertial disc (20), **characterized in that** the ratchet pawl (24) is mounted on the inertial disc (20).

2. The blocking mechanism as set forth in claim 1, **characterized in that** the ratchet pawl (24) is supported on the belt reel (10) in a load-bearing manner.

3. The blocking mechanism as set forth in claim 2, **characterized in that** the belt reel (10) includes a support disc (18) having a recessed pocket (26) in which the ratchet pawl (24) is arranged.

4. The blocking mechanism as set forth in claim 3, **characterized in that** the ratchet pawl (24) is arranged between the inertial disc (20) and a flange (10a) of the belt reel (10).

5. The blocking mechanism as set forth in any of claims 1 to 4, **characterized in that** the ratchet pawl (24) is pivotally mounted on a pin (25) at the inertial disc (20).

6. The blocking mechanism as set forth in any of claims 3 to 5, **characterized in that** the ratchet pawl (24) forms a two-armed lever, on the first arm of which at least one ratchet tooth is formed and the second arm of which has an actuating shoulder.

7. The blocking mechanism as set forth in claim 6, **characterized in that** the actuating shoulder engages a recess (26a) at the radially inner base of the pocket (26).

8. The blocking mechanism as set forth in any of claims 1 to 7, **characterized in that** the inertial disc (20) comprises at its outer circumference a control toothing (30) for cooperation with a vehicle-sensitive inertial sensor (32).

9. The blocking mechanism as set forth in any of the preceding claims, **characterized in that** the ratchet pawl (24) has a limitedly pliant mount at the inertial disc (20).

10. The blocking mechanism as set forth in any of the preceding claims, **characterized in that** the ratchet toothing (16) has non-symmetrical tooth flanks which, as viewed in the unwinding direction of the belt reel (10), are shorter and steeper on the leading side than on the trailing side.

## Revendications

1. Mécanisme de blocage pour un enrouleur de ceinture, qui présente une bobine de ceinture (10) montée rotative dans un cadre (12), une denture de blocage (16) agencée sur le cadre, un cliquet d'arrêt (24) agencé sur la bobine de ceinture (10) et destiné à coopérer avec la denture de blocage (16) et un disque d'inertie (20) rotatif par rapport à la bobine de ceinture (10) et servant d'élément capteur sensible à la sangle de ceinture, la bobine de ceinture (10) présentant un élément d'actionnement (26a) engageant le cliquet d'arrêt (24) et faisant s'engager le cliquet d'arrêt (24) dans la denture de blocage (16) en cas de rotation relative entre la bobine de ceinture (10) et le disque d'inertie (20), **caractérisé en ce que** le cliquet d'arrêt (24) est monté sur le disque d'inertie (20).

2. Mécanisme de blocage selon la revendication 1, **caractérisé en ce que** le cliquet d'arrêt (24) est en appui sur la bobine de ceinture (10) de manière à supporter des charges.

3. Mécanisme de blocage selon la revendication 2, **caractérisé en ce que** la bobine de ceinture (10) présente un disque support (18) avec une poche (26) en dégagement dans laquelle est agencé le cliquet d'arrêt (24).

4. Mécanisme de blocage selon la revendication 3, **caractérisé en ce que** le cliquet d'arrêt (24) est agencé entre le disque d'inertie (20) et une bride (10a) de la bobine de ceinture (10).

5. Mécanisme de blocage selon l'une des revendications 1 à 4, **caractérisé en ce que** le cliquet d'arrêt (24) est monté à pivotement sur une goupille (25) contre le disque d'inertie (20).

6. Mécanisme de blocage selon l'une des revendications 3 à 5, **caractérisé en ce que** le cliquet d'arrêt (24) forme un levier à deux bras, sur le premier bras duquel est formée au moins une dent de blocage et dont le deuxième bras présente un talon d'actionnement.

7. Mécanisme de blocage selon la revendication 6, **caractérisé en ce que** le talon d'actionnement s'engage dans un évidement (26a) sur le fond intérieur radial de la poche (26).

8. Mécanisme de blocage selon l'une des revendications1 à 7, **caractérisé en ce que** le disque d'inertie (20) présente sur sa périphérie extérieure une denture de commande (30) destinée à coopérer avec un capteur d'inertie (32) sensible au véhicule.

9. Mécanisme de blocage selon l'une des revendications précédentes, **caractérisé en ce que** le cliquet d'arrêt (24) présente un montage flexible de manière limitée sur le disque d'inertie (20).

10. Mécanisme de blocage selon l'une des revendications précédentes, **caractérisé en ce que** la denture de blocage (16) présente des flancs de dents asymétriques qui, vus en direction de déroulement de la bobine de ceinture, sont plus courts et plus raides devant que derrière.
